# EUROPEAN PATENT APPLICATION

(11) **EP 4 260 705 A1**
(43) Date of publication of application: **18.10.2023**
(21) Application number: 22168565.4
(22) Date of filing: 14.04.2022
(51) Int. Cl.: A01N 37/36, A01N 59/16, A01N 59/20, A01P 1/00, A01P 3/00, A01N 25/12, A01N 25/02

(54) **SOLID COMPOSITION AS A SOLUBLE PRECURSOR OF AN ECO-FRIENDLY AND EFFECTIVE METAL-BASED BIOCIDE, PROCESS AND USE THEREOF**

(71) Applicant: Biorem Engineering SA, 1260 Nyon (CH)
(72) Inventor: LAKAYE, Frédéric, 1260 Nyon (CH); SCHNÉE, Sylvain, 1260 Nyon (CH); GINDRO, Katia, 1260 Nyon (CH); GAUME, Alain, 1260 Nyon (CH)
(74) Representative: Calysta NV

(57) **Abstract**

The invention relates to a solid composition comprising an intimate mixture of at least an inorganic metal source, metal being copper(II) and/or zinc(II), and a carboxylic acid bearing at least two carboxylic groups; with the molar ratio metal/acid from 0.8 to 2.2. This composition is advantageous as precursor to prepare a biocidal solution having a high biocidal activity, being easily applied, being low- or non-(phyto)toxic and having a very good persistence. It also relates to a process of preparation of said precuror, preparation of a biocidal solution from said precusor, a process of plant protection and a use as biocide.

## Description

### Technical Field

The present invention relates to a solid composition particularly suitable as a precursor for the preparation of a highly effective and non-toxic/non-phytotoxic metal-based biocidal solution. In particular, the present invention relates to a metal-based composition in a solid form that is soluble (esp. in water) and, once its solution is applied on plants, plant products, seeds, tubers, fruits and soils, that is able to form an insoluble or slightly soluble compound, thereby providing a remarkably good activity over time and reducing the risk of lixiviation in the soil.

The present invention also relates to a process of preparing a biocidal solution from said solid composition, and its subsequent application on plants, plant products, seeds, tubers, fruits and soils.

The present invention also relates to the use of said composition as a biocide, especially as a fungicide and/or as bactericide, for example in agriculture, lawn and garden, forestry, and in the field of disinfection in general.

### Prior art

Biocides relates to a large family of chemical substances bringing together pesticides, in particular phytopharmaceutical products, and antimicrobial agents for medical, veterinary, domestic or industrial use, as well as disinfectants for fluids and surfaces e.g. for water, floors, swimming pools, work surfaces, etc.

In particular, pesticides such as fungicides and bactericides are important protecting agents for agriculture. Indeed, crops are subject to many diseases due in particular to pests like bacteria and fungi. These represent a constant and ever present threat to many crops and the control of pests is of great economic importance since bacterial or fungal growth on plants inhibits production of foliage, fruits or seeds, and pejorates the overall quality and/or yield of a cultivated crop. In addition, certain groups of fungi produce mycotoxins in infected crops, thereby generating health issues for humans and animals.

Fungicides are known in the art as either chemical or biological agents used to mitigate, inhibit or destroy fungi. Bactericides are known in the art as either chemical or biological agents used to mitigate, inhibit or destroy bacteria.

The use of copper, in particular Cu(II), for protecting or treating crops against phytopathogenic fungi and bacteria has been known for a long time.

For example, copper sulphate is known to be a very good fungicide but it is highly phytotoxic, especially due to its acidic properties. When it is combined with an alkaline agent, such as calcium hydroxide or sodium hydroxide, to get a neutralized form, its phytotoxicity is reduced but still exists. For example, one of these neutralized forms, which has been used for a very long time and is still being used, is well known under the name « Bordeaux mixture » and is a suspension of copper sulphate and lime in a ratio that has changed with time. It was used for example, as early as1882, to control the downy mildew on grapes.

Other copper(II)-based fungicides are also known like, for example, copper oxychloride, copper hydroxide, copper carbonate and cuprous oxide. Unfortunately, like the Bordeaux mixture, they are very insoluble in water at neutral pH. For example, copper hydroxide has a very low solubility in water (in the order of a few mg/L at 20°C).

Biocidal activity of the copper(II)-based fungicides is measured by the free Cu²⁺ ions (bio)available for consumption by the fungi, and it is proportional to the release of free Cu²⁺ ions. Therefore, the insoluble conventional copper(II)-based fungicides are normally applied on plants in relatively large amounts to be effectively active on fungi (for example, this necessitates the use of a high dose of 4 kg/ha of copper per season to ensure good fungicidal protection). The amount of soluble aqueous copper Cu²⁺ released is of the order of a few ppm at pH 7, but this very small amount of bioavailable ions Cu²⁺ is sufficient to ensure a good antifungal activity.

However, despite their biocidal effectiveness, conventional copper(II)-based fungicides exhibit a lot of disadvantages exposed below.

First, those copper(II)-based compounds are phytotoxic, causing for example leaf necrosis or burns especially, but not only, if used in too high amounts and/or in a repeated manner and/or on fragile plants.

Secondly, the relatively high amounts of copper-based compounds needed to reach appropriate level of bioavailable Cu²⁺ impacts greatly cost effectiveness, and above all, contributes to high soil residue contamination and raises dramatically their potential for phytotoxicity.

Thirdly, their high insolubility leads to a high persistance of those copper(II)-based compounds on plants, even when cropped (and also washed).

Fourthly, the amount of ions Cu²⁺ released from the solid/insoluble compound that is applied/deposited on the plants, e.g. by spraying, is uncontrollable with conventional copper(II)-based fungicides as it may change in an unpredictable way as a function of various environmental factors like ambient humidity, dissolved carbon dioxide gas, temperature, etc. The amount of ions Cu²⁺ can therefore change, for example, from a few ppm to more than 100 ppm, resulting in an increasing risk of phytotoxicity, e.g. for more fragile plants.

Next, a lot of other disadvantages of conventional copper(II)-based fungicides come from their insolubility in water, forcing generally to use them in the form of a suspension in water. This requirement of using a suspension brings notably :
- issues of clogging of applicators, spraying systems (commonly used in such applications) ;
- issues of instability of the suspension, due to settlement of the solid composition (leading to the requirement of an appropriate recurrent mixing step and/or leading to an uncontrollable decrease of the ratio solid/water of said suspension); and
- poor coverage/spreading on plants and/or inhomogeneous coverage.

Integrated agitating means are sometimes used in application systems in order to decrease or avoid clogging and/or settlement but, this leads to more complicated and expensive systems and the agitation generally does not completely annihilate issues.

Finally, the particles of the solid compounds constituting a reservoir of Cu²⁺ ions are partially lost by leaching when it rains, leading to a decrease or annihilation of the biocidal activity. This requires generally conventional copper(II)-based fungicides to be applied on a same crop in a recurrent manner (generally, 6-10 applications a year, and up to 20 depending on the climate and the nature of the crop), impacting negatively cost effectiveness and soil contamination by lixiviation.

It is also described to use known insoluble copper compounds, like copper hydroxide, copper carbonate or cuprous oxide, in the presence of ligands/chelating agents, in order to increase their solubility and to control Cu²⁺ bioavailability.

In particular, it is known, from Patent Application WO 91/13552, that the combination of copper(II) with four ammonia molecules in a complex, makes it possible to increase the fungicidal activity due to copper solubilization and high level of bioavailable Cu²⁺. However, the high solubility renders this "copper complex" completely leachable, with a very low persistence on plants. Consequently, this requires applications closer in time and an increasing number of applications, thereby annihilating the positive impact of their solubility on their global biocidal effectiveness (metal amounts applied will be globally increased) and increasing the impact on environment.

Patent US6562757 describes a plant-protection composition comprising a copper source (e.g. copper(II) hydroxide) in the presence of low amounts of a chelating compound (e.g. calcium citrate or calcium malate, preneutralized from their acid with calcium hydroxide). According to US6562757, this allows to dissolve partially the insoluble copper source (potentially maximum 43%), thereby increasing the amount of bioavailable Cu²⁺ ions with a gradual release, while controlling partially leaching. Nevertheless, the amount of bioavailable Cu²⁺ ions is still very low and the precursor composition is still partially insoluble and therefore, does not solve the issues relative to the use of a suspension for application.

It is also known a commercial product sold under the name Dentamet^{®} for use as a fertilizer and to protect some plants. This product is sold as a solution of copper(II) sulphate and zinc(II) sulphate (2% and 4% in metal, respectively) in the presence of citric acid, at pH 2.5. Unfortunately, the solubility of the copper and zinc sulphates renders this product very leachable, with a very low persistence on plants and its negative consequences already exposed above. It is to be noted that upon evaporation of a Dentamet solution, one gets in a solid form a mixture of the constituents of the solution, namely copper(II) sulphate, zinc(II) sulphate and citric acid. Moreover, fungicide/fertilizers in a liquid form are not very popular among users because such products have decreased shelf life compared to powder/solid products and are more voluminous and heavy to transport (leading to higher shipping costs).

It is also to be noted that, next to phytotoxicity for most of them, all copper(II)-based fungicides available on the market for plant protection, including the Dentamet product, are GHS classified H400 or H410, which means that they are considered as hazardous because of their high toxicity for aquatic life (with long lasting effects).

Though, global health and environmental regulations are becoming more and more stringent, for example requiring less chemical residue on crops and in the soil, and using less toxic and more eco-friendly biocidal products. In particular, the maximum application rate of copper that is authorized (at least in Europe) is 4 kg/ha/year but the will is to decrease this maximum dosage as much as possible in the future in order to minimise the accumulation in soil and the exposure for non targeted organisms to copper.

Therefore, a need still exists for a metal-based biocide (in particular, bactericide and/or fungicide) (i) having a high biocidal activity while requiring less metal amounts per treated surface (e.g. crop surface) than conventionnal copper(II)-based fungicides, (ii) being easily applied, e.g. avoiding issues of clogging and settlement, (iii) being low- or non-(phyto)toxic and (iii) showing a good equilibrium between properties of leaching and persistance on plants.

### Objectives of the invention

The present invention has notably the objective of overcoming the cited drawbacks of the prior art.

More precisely, an objective of the invention is to provide a composition in a solid form particularly suitable as a precursor for the preparation of a metal-based biocidal solution.

In particular, an objective of the invention is to provide a composition in a solid form that is particularly suitable as a precursor for the preparation of metal-based biocidal solution showing a high biocidal activity, in particular requiring less metal per treated surface than conventionnal copper(II)-based fungicides.

Another objective of the invention is to provide a composition in a solid form that is particularly suitable as a precursor for the preparation of metal-based biocidal solution, with low or no phytotoxicity.

Still another objective of the invention is to provide a composition in a solid form that is particularly suitable as a precursor for the preparation of a metal-based biocidal solution, which shows low or no toxicity for fish, birds, mammals and bees.

Still another objective of the invention is to provide a composition in a solid form that is particularly suitable as a precursor for the preparation of metal-based biocidal solution, that is easily applied, e.g. avoiding issues of clogging and settlement.

Still another objective of the invention is to provide a metal-based composition in a solid form that is particularly suitable as a precursor for the preparation of biocidal solution, that shows an equilibrium between properties of high leaching (high solubility) and high persistance (low solubility) on plants.

Still another objective of the invention is to provide a composition in a solid form that is particularly suitable as a precursor for the preparation of metal-based biocidal solution, that is cost-effective, eco-friendly and allows a simple process for its preparation and its application on plants, plant products, seeds, tubers, fruits and soils.

Another objective of the invention is to provide a solution to the disadvantages of the prior art that is simple and cheap to manufacture and use.

### Summary of the invention

The invention relates to a composition in a solid form which comprises an intimate mixture of a solid compound (A) and a solid compound (B):
- compound (A) being at least an inorganic metal source, metal being copper(II) or zinc(II);
- compound (B) being a carboxylic acid bearing at least two carboxylic groups;
with the molar ratio metal/acid being from 0.8 to 2.2.

Hence, the invention lies on a novel and inventive approach since it enables to find a solution for the disadvantages of prior art. The inventors have indeed found that combining intimately a solid inorganic source of copper(II) and/or zinc(II) with a specific chelating molecule in a specific stoechiometry (molar ratio metal/acid) allows to reach a solid composition that is very soluble in aqueous medium and, therefore, suitable as a precursor to prepare a solution to apply on plants. Moreover, it was also surprisingly found that, from said solution, one can obtain (e.g. upon water evaporation) an irreversibly insoluble or slightly soluble compound that shows a high biocidal activity and that shows a good equilibrium between leaching and persistance as well as no or very low phytotoxicity. Finally, it has also been discovered that the insoluble or slightly soluble compound obtained shows very low or no toxicity (e.g. on fish, birds, mammals and bees).

The invention solves therefore the problems posed and exposed above, in view of the state of the art in the domain of metal-based biocides.

The invention is surprising and inventive notably in the sense that it combines advantages of, on the one hand, solubility (before/during application on plants) and, on the other hand, insolubility (after application and once on plants). Indeed, the invention provides a precursor in a solid form that is soluble in water and able to form an advantageous clear solution, but that irreversibly forms, e.g. once said solution is applied on plants and upon water evaporation, an advantageous insoluble or slightly soluble compound (with no or low (phyto)toxicity).

The invention relates also to a process of preparing a composition in a solid form according to the invention, comprising a step of mixing solid compound (A) and solid compound (B) by applying a mechanical action to obtain an intimate mixture.

The invention relates also to a process of preparing a biocidal solution, that comprises a step of combining the composition in a solid form according to the invention and a solvent, said solvent comprising water.

Moreover, the invention relates also to a process of preventing or inhibiting the growth of living pathogenic organisms on plants, plant products, seeds, tubers, fruits and soils, which comprises, in order, steps of:
a) preparing a biocidal solution according to the first process of the invention; and
b) applying said solution on plants, plant products, seeds, tubers, fruits or soils.

Finally, the invention relates also to the use of a composition in a solid form according to the invention, as a biocide in:
i) agriculture, including field crops, horticulture, arboriculture, viticulture, as preharvest and/or postharvest treatment;
ii) lawn and garden including professional turf;
iii) forestry;
iv) the field of disinfection in general.

Other features and advantages of the invention will be made clearer from reading the following description of preferred embodiments.

Throughout the present text, when a range is indicated, the extremities are included, except if explicitly described in another way. In addition, all the integral and subdomain values in the numerical range are expressly included as if explicitly written.

The composition according to the invention comprises an intimate mixture of a solid compound (A) and a solid compound (B).

By "intimate mixture" within the meaning of the invention, it is to be understood, as commonly accepted in the chemistry community, a mixture of solid particles of at least two different natures/compositions, which is homogeneous and which shows a close union or combination of said solid particles, e.g. interactions between particles of compounds (A) and (B) and/or coating of particles of compound (B) by particles of compound (A).

Various equipment or techniques which may be used to obtain an intimate mixture according to the invention are those known in the art allowing a mechanical action and include, for example and advantageously, mixing by ball milling and mixing by twin-screw extrusion.

Compound (A) according to the invention is at least an inorganic metal source, metal being copper(II) or zinc(II).

Copper(II) is advantageous as it has since a long time desmonstrated its high effectiveness against fungi or bacteria. Zinc(II) is an advantageous alternative to copper(II) as it is also known to have a biocidal activity (even if generally lower than copper for some diseases) and its effect on health and environment is less detrimental than copper.

According to an embodiment of the invention, when metal is copper(II), the at least an inorganic metal source is selected from the group consisting in copper hydroxide, copper oxychloride, basic copper carbonate and copper oxide. Preferably, when metal is copper(II), the at least an inorganic metal source is copper(II) hydroxide (or Cu(OH)₂).

According to another embodiment of the invention, when metal is zinc(II), the at least an inorganic metal source is selected from the group consisting of zinc oxide, zinc carbonate and zinc hydroxide. Preferably, when metal is zinc(II), the at least an inorganic metal source is zinc(II) oxide (or ZnO).

According to still another embodiment of the invention, compound (A) comprises at least two inorganic metal sources (of the same metal or of different metals).

Advantageously, compound (A) comprises at least two inorganic metal sources of different metals or, in other words, comprises at least an inorganic copper(II) source and at least an inorganic zinc(II) source. Preferably, compound (A) comprises copper(II) hydroxide and zinc(II) oxide. The presence of a copper(II) source and a zinc(II) source together allows to increase synergetically biocidal activity, as less metal amounts (total amount copper + zinc) are needed to achieve the same biocidal activity/efficacity than when using one of these metals individually.

When compound (A) comprises at least an inorganic zinc(II) source and at least an inorganic copper(II) source, the ratio Cu:Zn in the composition is preferably about 2:1 or alternatively, about 1:2.

Compound (B) according to the invention is a carboxylic acid bearing at least two carboxylic groups, optionnally with at least an hydroxyl group.

Examples of carboxylic acids according to embodiments of the invention are shown in the following table :

| **Common name** | **IUPAC name** |
|---|---|
| **Acid *with* two *carboxylic groups*** | |
| Oxalic acid | Ethanedioic acid |
| Itaconique acid | Methylidenebutanedioic acid |
| L-Glutamic acid | *(S)*-2-Aminopentanedioic acid |
| Malonic acid | Propanedioic acid |
| L-Aspartic acid | L-Aspartic acid |
| Succinic acid | Butanedioic acid |
| α-Ketoqlutaric acid | 2-Oxopentanedioic acid |
| Tartronic acid | 2-hydroxypropanedioic acid |
| Tartaric acid | 2,3-Dihydroxybutanedioic acid |
| Malic acid | 2-Hydroxybutanedioic acid |

| **Acid *with three carboxylic groups*** | |
|---|---|
| Citric acid, monohydrate | 2-Hydroxypropane-1,2,3-tricarboxylic acid monohydrate |
| Citric acid, anhydrous | 2-Hydroxypropane-1,2,3-tricarboxylic acid |
| Trans-aconitic acid | trans-Propene-1,2,3-tricarboxylic acid |
| Tricarballylic acid | 1,2,3-Propanetricarboxylic acid |

| **Acid *with four carboxylic groups*** | |
|---|---|
| 1,2,3,4-Butanetetracarboxylic acid | 1,2,3,4-Butanetetracarboxylic acid |

Preferably, compound (B) is a carboxylic acid bearing at least three carboxylic groups, optionnally with at least an hydroxyl group.

In a more preferred embodiment, compound (B) is trans-aconitic acid, tricarballylic acid or citric acid.

In the most preferred embodiment, compound (B) is citric acid. Citric acid is a carboxylic acid bearing three carboxylic groups and an hydroxyl group. For example, compound (B) is anhydrous or monohydrate citric acid. Citric acid is advantageous in the present invention as it is inexpensive, has a good chelating power for copper(II) or zinc(II) and is of low (phyto)toxicity as such. Moreover and above all, it has been evidenced that it allows to create with copper(II) and zinc(II) in the specific stoechiometry of the invention (molar ratio metal/acid), (1) an aqueous solution (thereby dissolving the insoluble inorganic copper or zinc source) and (2) upon crystallization/precipitation (e.g. by water evaporation), insoluble or slightly soluble compounds/complexes of low (phyto)toxicity.

In the composition according to the invention, the molar ratio metal/acid is from 0.8 to 2.2. For the sake of clarity, this molar ratio is obtained by dividing the mole number of the metal(s) from the inorganic metal source(s) by the mole number of the carboxylic acid molecule. This range of molar ratio allows, in combination with the other features of the composition, to reach the objectives of the invention, in particular to reach a solid composition which is able to form a solution in water, and that irreversibly forms, upon water evaporation and/or precipitation/crystallization, an insoluble or slightly soluble compound.

In an advantageous embodiment, the molar ratio metal/acid is equal to or lower than 2.1; 2; 1.9; 1.8; 1.7; 1.6 or 1.5.

In another advantageous embodiment, the molar ratio metal/acid is equal to or higher than 0.9; 1.0; ;1.05 ; 1.1; 1.2; 1.3 or 1.4.

Such upper and lower values of molar ratios allows in the invention to get closer from the identified optimal stoechiometry, namely a stoechiometry metal:acid of 3:2 and/or 2:1. Small deviations from this 3:2 or 2:1 stoechiometry do not prevent from reaching the objectives of the invention, but getting closer to 1.5 or closer to 1.67 (targeting a mix bewteen 3:2 and 2:1 stoechiometries) or closer to 2 is better.

Preferably, the molar ratio metal/acid is from from 0.9 to 2.2, and more preferably, from 1 to 2.2, or even from 1.1 to 2.2, or from 1.2 to 2.2. Preferably, the molar ratio metal/acid is from 1.3 to 2.2, and more preferably, from 1.4 to 2.2.

Preferably also, the molar ratio metal/acid is from from 0.8 to 2.1, and more preferably, from 0.8 to 2.

Preferably also, the molar ratio metal/acid is from 1 to 2.1, and more preferably, from 1.1 to 2.1, or even from 1.2 to 2.1, or 1.4 to 2.1.

Preferably also, the molar ratio metal/acid is from 1 to 2, and more preferably, from 1.1 to 2, or even from 1.2 to 2, or 1.3 to 2, or even 1.4 to 2.

According to a very preferred embodiment, the molar ratio metal/acid is about 1.5.

According to an alternative very preferred embodiment, the molar ratio metal/acid is about 2.

According to still an alternative very preferred embodiment, the molar ratio metal/acid is about 1.67.

According to an embodiment, the composition of the invention is soluble in water (i.e. solubility > 1 g/L at 20°C). In particular, the composition according to the invention has a water solubility of at least 30, at least 40, at least 50 or preferably, at least 60 g/L or even at least 70 g/L or better, at least 80g/L at 20°C.

According to an embodiment, the composition of the invention is in the form of a powder, granules or tablets. If it is in the form of a powder, it is preferably in the form of a free flowing powder.

The composition of the invention may also comprise other ingredients/additives next to compound (A) and compound (B) without departing from the present invention. For example, the composition of the invention may comprise at least one additive selected from a list comprising pH regulating agents, film-forming agents, anti-caking agents, surfactants, wetting agents, anti-foaming agents, anti-drifts, sticking agents, thickeners, foaming agents, solidifying agents, other biocides, fertilizers and stabilizers

According to the invention, the process of preparing a biocidal solution comprises a step of combining the composition in a solid form and a solvent, said solvent comprising water. Preferably, said solvent is essentially water. This is advantageous as the biocide solution is obtained from simply dissolving the solid composition, esp. in water. With the composition of the invention as a precursor of a biocidal solution, one avoids issues related to use of suspensions and exposed above (clogging, settlement or needs for regular mixing, poor coverage of plants, etc.).

Additive(s) may also be used, either added prealably to the solvent, or added to the solution once prepared, or together with combining the solid composition and the solvent. Examples of additives are pH regulating agents, film-forming agents, anti-caking agents, surfactants, wetting agents, anti-foaming agents, anti-drifts, sticking agents, thickeners, foaming agents, solidifying agents, other biocides, fertilizers and stabilizers.

Preferably, the amounts of the solid composition and the solvent are such that the obtained solution has a concentration in metal M between 0.01 g/L and 5 g/L and preferably, between 0.05 g/L and 3 g/L. More preferably, the amounts of the solid composition and the solvent are such that the obtained solution has a concentration in metal M between 0.1 g/L and 2 g/L

According to the invention, the process of preventing or inhibiting the growth of living pathogenic organisms on plants, plant products, seeds, tubers, fruits and soils, comprises, in order, the steps of:
a) preparing a biocidal solution by combining the composition of the invention and a solvent, said solvent comprising water (process of preparing a biocidal solution of the invention); and
b) applying said solution on plants, plant products, seeds, tubers, fruits or soils.

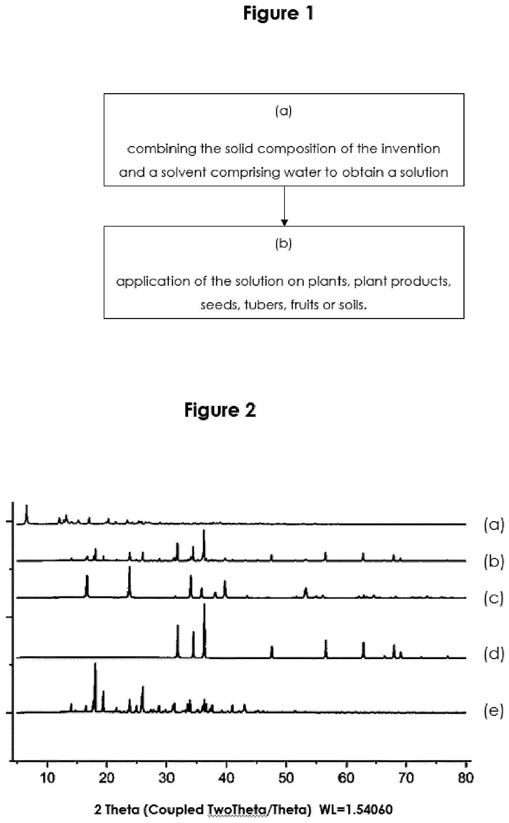

Figure 1 is a flow chart showing steps (a) and (b) of the process of preventing or inhibiting the growth of living pathogenic organisms on plants, plant products, seeds, tubers, fruits and soils, according to the present invention.

According to an embodiment, said step of applying is carried out by spraying or pulverizing or dipping or drench or coating.

According to another embodiment, the amount of metal applied on said plants, plant products, seeds, tubers, fruits or soils is below 4000 g/ha by application (registered maximal dosage), preferably below 3000 g/ha, more preferably, below 2000 g/ha, or even below 1000 g/ha or below 500 g/ha. For the sake of clarity, the amount of metal according to this embodiment is determined/computed based on the molar mass of the metallic element(s), Cu and/or Zn.

According to still another embodiment, the process of preventing or inhibiting the growth of living pathogenic organisms on plants, plant products, seeds, tubers, fruits and soils comprises, after the step b) of applying, a step c) of crystallization and/or precipitation, on plants, plant products, seeds, tubers, fruits or soils, of a solid compound (C) slightly soluble to insoluble in water. For example, this step c) of crystallization and/or precipitation is carried out by solvent evaporation, e.g. natural water evaporation (through ambiant temperature, wind, etc.). Through the step c) according to the invention, a solid compound (C) is formed on plants, plant products, seeds, tubers, fruits or soils, in the form of an amorphous precipitate or in a crystalline form or in the form of a mixture thereof.

In particular, when compound (B) is citric acid, solid compound (C) comprises a complex with citrate having an ionization state from 0, namely (C₆H₈O₇), to -4 , namely (C₆H₄O₇)⁴⁻.

In an embodiment, when compound (B) is citric acid, solid compound (C) in the invention comprises at least a citrate with the formula Cu_{w}Znₓ(C₆H_{y}O₇)_{z}, where
- 0 ≤ w ≤ 3;
- 0 ≤ x ≤ 3;
- 1 ≤ (w + x) ≤ 3;
- 4 ≤ y ≤ 8;
- 1 ≤ z ≤2;
- 1 ≤ (w + x) / z ≤ 2 (for sake of clarity, (w + x) / z corresponds to the molar ratio metal/acid according to the invention);
and/or its hydrates.

In an advantageous embodiment, when compound (B) is citric acid, solid compound (C) comprises (i) a copper citrate with the formula Cu₃(C₆H₅O₇)₂ or the formula Cu₂(C₆H₄O₇) or (ii) a zinc citrate with the formula Zn₃(C₆H₅O₇)₂ or (iii) a mixed zinc-copper citrate with the formula ZnCu₂(C₆H₅O₇)₂ or (iv) a mixed zinc-copper citrate with the formula Zn₂Cu(C₆H₅O₇)₂ or (v) a hydrate of (i) or (ii) or (iii) or (iv), or their mixtures thereof.

Next to said copper and/or zinc citrate(s), solid compound (C) may also comprise other compounds, soluble or insoluble, without departing from the scope of the present invention. For example, solid compound (C) may comprise "free" citric acid (for example, if it is in excess in the composition in a solid form of the invention compared to the targeted stoechiometry of the insoluble metal citrate).

Preferably, when compound (B) is citric acid, solid compound (C) consists essentially in (i) a copper citrate with the formula Cu₃(C₆H₅O₇)₂ or the formula Cu₂(C₆H₄O₇) or (ii) a zinc citrate with the formula Zn₃(C₆H₅O₇)₂ or (iii) a mixed zinc-copper citrate with the formula ZnCu₂(C₆H₅O₇)₂ or (iv) a mixed zinc-copper citrate with the formula Zn₂Cu(C₆H₅O₇)₂ or (v) a hydrate of (i) or (ii) or (iii) or (iv), or their mixtures thereof.

In particular, copper citrates, in particular of the formula Cu₃(C₆H₅O₇)₂ and its hydrates or of the formula Cu₂C₆H₄O₇ and its hydrates (for example, Cu₂(C₆H₄O₇).H₂O), are advantageous as, next to their low solubility increasing their persistence while still having a high biocidal activity, they show no toxic effect on fish, birds, mammals and bees (see notably, "Pesticide Toxicity Profile: Copper-based Pesticides" from Fishel (2011), Pesticide Information Office, Florida Cooperative Extension Service, Institute of Food and Agricultural Sciences, University of Florida).

Also, zinc citrates, in particular of the formula Zn₃(C₆H₅O₇)₂ and its hydrates, are advantageous as, next to their low solubility increasing their persistence while keeping a very good biocidal activity, they are known as food ingredients "generally recognized as safe". Indeed, in Europe, zinc citrates are on the positive list of Regulation (EC) No. 1925/2006 on food fortification. They are also listed in Directive 2002/46/EC of the European Parliament and the Council relating to food supplements as vitamins and mineral substances which may be used in the manufacture of food supplements. Furthermore, it is listed as mineral salt in the EU Regulation (EC) No. 609/2013 on food intended for infants and young children, food for special medical purposes, and total diet replacement for weight control. Next, in the US, zinc citrates can be considered as substances classified as dietary ingredients according to FDC Act., § 201 (ff). In oral care, zinc citrate products are classified as Class I active ingredient with respect to safety and a Class III active ingredient with respect to efficacy. Since 2009, zinc citrates are "generally recognized as safe" (self-affirmed GRAS) in full compliance with the US Food, Drug, and Cosmetic Act.

Advantageously, solubility of compound (C) is below or equal to 1 g/L. Preferably, it is below or equal to 0.8 g/L. Preferably also, it is higher than or equal to 0.1 g/L or better, higher than or equal to 0.2 g/l, or even 0.3 g/L. More preferably, it is higher than or equal to 0.5 g/L.

This is advantageous to reach a good Cu(II) bioavailibility and an equilibrium between high leaching/high persistance properties, especially in comparison with very low solubility of copper hydroxide.

According to the invention, the composition in a solid form is used as a biocide, especially as a fungicide and/or as a bactericide, in the following field:
i) agriculture, including field crops, horticulture, arboriculture, viticulture, as preharvest and/or postharvest treatment;
ii) lawn and garden including professional turf;
iii) forestry; and
iv) the field of disinfection in general.

In the filed of disinfection in general, the composition in a solid form may be advantageous for numerous uses like, but not limited to medical, veterinary, domestic and industrial uses, for example as disinfectants for fluids (water, air, etc) and surfaces (floors, work surfaces, toilets, medical devices, prothesis, etc.).

In particular, the composition in a solid form according to the invention is used as a biocide in :
i) agriculture, including field crops, horticulture, arboriculture; viticulture, as preharvest and/or postharvest treatment;
ii) lawn and garden including professional turf; and
iii) forestry.

The composition of the invention is advantageously used as a biocide, for treating various bacterial and fungal diseases, on various plants, products of plants, seeds, tubers, fruits and soils. In particular, the composition of the invention is advantageously used as a fungicide, e.g. for treating fungal diseases such as, but not limited to, grapevine downy Mildew (Plasmopara viticola), potatoes Mildew (Phytophtora infestans) and grey mould (Botrytis cinerea) on grapevines and numerous other crops.

Preferably, in the use of the invention, the composition in a solid form of the invention is used in solution in water, optionally with at least one additive selected from a list comprising pH regulating agents, film-forming agents, anti-caking agents, surfactants, wetting agents, anti-foaming agents, anti-drifts, thickeners, foaming agents, solidifying agents, other biocides, fertilizers and stabilizers.

The composition of the invention may also be advantageous for promoting growth of plants and may therefore be used as a fertilizer (e.g. foliar fertilizer). Indeed, zinc and copper are essential element for plant growth. For example, zinc is important for root development and at crop emergence due to its role in growth hormone synthesis, and copper improves photosynthesis and enzyme activity and also plays an important role in the formation of lignin in cell walls.

Embodiments of the invention will now be further described by way of examples, together with a comparative example not in accordance with the invention. The following examples are provided for illustrative purposes, and are not intended to limit the scope of this invention.

### Examples

### 1) Preparation of compositions in a solid form according to the invention

The manufacture of compositions according to the invention was performed in a continuous process using a Thermo Electron EuroLab XL16 40 L/D high torque twin screw extruder equipped with three Brabender DDW-MD2-DDSR20N gravimetric dosage of the starting raw materials.

The TSE (twin screw extruder) was equipped with two intermeshing corotating screws (200-400 rpm) mounted on splined shafts in a temperature controlled closed barrel. The designed screws are tight and self-wiping, which eliminates stagnant zones over the entire length of the process section. This results in an intimate mixture and forms free flowing powders.

Each solid composition (1-5) were analyzed by powder X-Ray diffraction. Measurements were performed in Bragg Brentano geometry using Kalpha1 radiation provided by a Johannson monochromator and measuring during 1 h per sample.

### - Composition 1 :

Anhydrous citric acid and copper(II) hydroxide were mixed at a rate of 10 Kg/h according to the following, with molar ratio copper:acid being 3:2 :

| **Starting materials** | **CAS** | **Brabender 1 (Kg/h)** | **Brabender 2 (Kg/h)** |
|---|---|---|---|
| Copper hydroxide | 20427-59-2 | 4.324 | - |
| Citric acid anhydrous | 77-92-9 | - | 5.676 |

The XRD analysis of the obtained solid composition shows a binary mixture of the two compounds, anhydrous citric acid and copper hydroxide (overlay of their respective XRD pattern).

Composition 1 includes 28.16 wt% in copper (Cu).

### - Composition 2:

Anhydrous citric acid and copper(II) hydroxide were mixed at a rate of 10 Kg/h according to the following, with molar ratio zinc:acid being 3:2 :

| **Starting materials** | **CAS** | **Brabender 1 (Kg/h)** | **Brabender 2 (Kg/h)** |
|---|---|---|---|
| Zinc oxide | 1314-13-2 | 3.885 | - |
| Citric acid anhydrous | 77-92-9 | - | 6.115 |

The XRD analysis of the obtained solid composition shows a binary mixture of the two compounds, anhydrous citric acid and zinc oxide (overlay of their respective XRD pattern).

Composition 2 includes 31.20 wt% of zinc metal (Zn).

### - Composition 3:

Anhydrous citric acid, copper(II) hydroxide and zinc(II) oxide were mixed at a rate of 10 Kg/h according to the following, with molar ratio copper:zinc:acid being 2:1:2 :

| **Starting materials** | **CAS** | **Brabender 1 (Kg/h)** | **Brabender 2 (Kg/h)** | **Brabender 3 (Kg/h)** |
|---|---|---|---|---|
| Zinc oxide | 1314-13-2 | 1.232 | - | - |
| Copper hydroxide | 20427-59-2 | - | - | 2.953 |
| Citric acid anhydrous | 77-92-9 | - | 5.815 | - |

The XRD analysis of the obtained solid composition shows a ternary mixture of the three compounds, anhydrous citric acid, copper hydroxide and zinc oxide (overlay of their respective XRD pattern).

Composition 3 includes 19.23 wt% of copper metal (Cu) and 9,90 wt% of zinc metal (Zn).

### - Composition 4:

Anhydrous citric acid (2 moles), copper(II) hydroxide (1 mole) and zinc(II) oxide (2 moles) were mixed at a rate of 10 Kg/h according to the following, with molar ratio copper:zinc:acid being 1:2:2 :

| **Starting materials** | **CAS** | **Brabender 1 (Kg/h)** | **Brabender 2 (Kg/h)** | **Brabender 3 (Kg/h)** |
|---|---|---|---|---|
| Zinc oxide | 1314-13-2 | 2.525 | - | - |
| Copper hydroxide | 20427-59-2 | - | - | 1.514 |
| Citric acid anhydrous | 77-92-9 | - | 5.961 | - |

The XRD analysis of the obtained solid composition shows a ternary mixture of the three compounds, anhydrous citric acid, copper hydroxide and zinc oxide. This is clear from Figure 2 showing patterns of XRD patterns of (b) solid composition 4, (c) copper hydroxide, (d) zinc oxide and (e) anhydrous citric acid. Pattern (b) is an overlay of respective XRD patterns (c), (d) and (e).

Composition 4 includes 9.86 wt% of copper metal (Cu) and 20.30 wt% of zinc metal (Zn).

### - Composition 5:

Anhydrous citric acid (1 mole) and copper(II) hydroxide (2 moles) were mixed at a rate of 10 Kg/h according to the following, with molar ratio copper:acid being 2:1 :

| **Starting materials** | **CAS** | **Brabender 1 (Kg/h)** | **Brabender 2 (Kg/h)** |
|---|---|---|---|
| Copper hydroxide | 20427-59-2 | 5.039 | - |
| Citric acid anhydrous | 77-92-9 | - | 4.961 |

The XRD analysis shows a binary mixture of the two compounds, anhydrous citric acid and copper hydroxide (overlay of their respective XRD pattern).

Composition 5 includes 32.82 wt% of copper metal (Cu).

### 2) Preparation of biocidal solutions

- Solutions from composition 1 :
   Different amounts of solid composition 1 were added to water at room temperature while gently stirring with a Velp Scientifica magnetic steerer at 500 RPM with PTFE plain stirrer bar (solution 1a : 0.67 g/L; solution 1b: 1.34 g/L; solution 1c: 2.68 g/L; solution 1d : 4.03 g/L). Clear solutions were obtained after 1-5 minutes.
- Solutions from composition 2 :
   Different amounts of solid composition 2 were added to water at room temperature while gently stirring with a Velp Scientifica magnetic steerer at 500 RPM with PTFE plain stirrer bar (solution 1a : 0.61 g/L; solution 1b: 1.21 g/L; solution 1c: 2.42 g/L; solution 1d : 3.63 g/L). Clear solutions were obtained after 1-5 minutes.
- Solutions from composition 3 :
   Different amounts of solid composition 3 were added to water at room temperature while gently stirring with a Velp Scientifica magnetic steerer at 500 RPM with PTFE plain stirrer bar (from 0.025 g/L to 3 g/L). Clear solutions were obtained after 1-5 minutes.
- Solutions from composition 4:
   Different amounts of solid composition 4 were added to water at room temperature while gently stirring with a Velp Scientifica magnetic steerer at 500 RPM with PTFE plain stirrer bar (from 0.025 g/L to 3 g/L). Clear solutions were obtained after 1-5 minutes.
- Solutions from composition 5:
   Different amounts of solid composition 5 were added to water at room temperature while gently stirring with a Velp Scientifica magnetic steerer at 500 RPM with PTFE plain stirrer bar (from 0.025 g/L to 3 g/L). Clear solutions were obtained after 1-5 minutes.

### 3) Results of crystallization

Each of compositions 1-5 was dissolved at a concentration of 60 g/L in water. Then, the obtained clear solution was placed in a glass petri dish at room temperature and atmospheric pressure for 24 hours. The obtained solid compound (compound (C) according to the invention) was filtered and dried and finally, analyzed by powder X-ray diffraction. Measurements were performed in Bragg Brentano geometry using Kalpha1 radiation provided by a Johannson monochromator and measuring during 1 h per sample.

Crystallized compound (C) obtained from compositions 1-3 : The XRD analysis for each compound obtained from crystallization of aqueous solutions of compositions 1-3 shows a pattern that does not correspond to those of the compounds (A) and (B) present in the starting solid composition 1-3 (namely anhydrous citric acid and copper hydroxide and/or zinc oxide).

Crystallized compound (C) obtained from composition 4 : Figure 2(a) shows the XRD pattern of the solid compound (C) obtained by crystallization of an aqueous solution of composition 4, which does not correspond to those of the compounds (A) and (B) present in the starting solid composition 4 (namely anhydrous citric acid, copper hydroxide and zinc oxide). Figure 2 shows also, for comparison, patterns of (b) the solid composition 4 before solubilization, (c) copper hydroxide, (d) zinc oxide and (e) anhydrous citric acid. Solid compound (C) obtained after solubilization of composition 4 and crystallization of the solution is expected to be a mixed zinc-citrate complex of the general formula Zn₂Cu(C₆H₅O₇)₂.xH₂O.

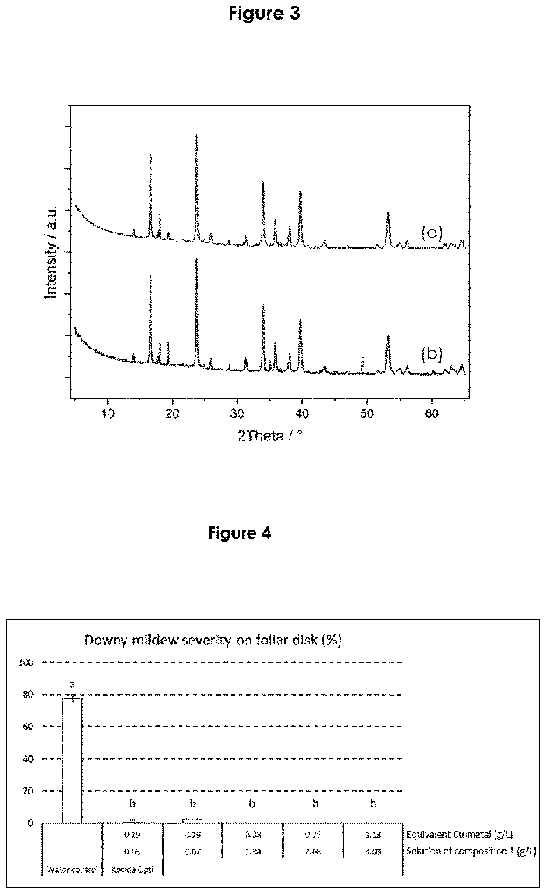

Crystallized compound (C) obtained from composition 5 : Figure 3(b) shows the XRD pattern of the solid compound (C) obtained by crystallization of an aqueous solution of composition 5. A structural search in the ICSD returns a hit (CIF ICSD 251344) corresponding to Cu₂(C₆H₄O₇).H₂O. The theoretical XRD pattern of Cu₂(C₆H₄O₇).H₂O (CIF ICSD 251344) is given at Figure 3(a). This result evidences that a nearly pure phase of that copper citrate compound was obtained by dissolving composition 5 in water and crystallizing it.

### 4) Results of solubility

*Solid compositions* 1-5 : theses compositions are fully soluble in water at room temperature, with a solubility value of higher than 80 g/L, and each provides a transparent/clear solution after a few minutes maximum under classical stirring conditions.

For comparison, solubility of Cu(OH)₂ is 0.003 g/L and that of ZnO is 0.004 g/L.

Compounds (C) : each solid precipitate obtained from solutions of compositions 1-5 at point 3) was put in suspension in water at room temperature with a concentration of 10 g/L, and mixed during five minutes (Velp Scientifica magnetic steerer at 500 RPM with PTFE plain stirrer bar). After a centrifugation (Hettich Roto Silenta 630 RS set to 3000 RPM - 2224 RCF), the supernatant solution was analyzed by enzymatic accredited dosage procedure of copper and citrates (Agroscope STS0223 13.5.07.ME.023 and 13.5.07.ME.074) to determine the solubility.

The solid compounds (C) obtained from solutions of compositions 1-5 all show a solubility between 0.5 and 1 g/L, which means that they are slightly soluble and therefore show a good compromise between weak to moderate lixiviation and prolongated persistance.

### 5) Fungicidal activity results (lab tests)

### Bioassay of efficacy of composition 1 against P. viticola on grapevine leaf disk

### Methodology :

Composition 1 was tested as preventive protection towards grapevine downy mildew, in comparison with a suspension of the commercial product Kocide Opti^{™} (based on copper hydroxide, insoluble), as a reference. Both were standardized at 300 g of metal copper per ha for the minimal tested dosage. The range of tested concentrations (solution in water) were as followed : 1, 2, 4 and 6 fold in comparaison of the registered dosage of Kocide Opti (solutions 1a, b, c, d). Solutions 1 a-d from composition 1 and the suspension of Kocide Opti were applied by means of a Potter spray tower on Petri dishes containing 10 leaf disks (cv Cabernet Sauvignon) on water-soaked filter papers. After application, the leaf discs are gently dried under a laminar flow hood. Inoculation is carried out 24 hours after treatment/application, using a suspension of sporangia (1.10⁵ sporanges.ml-1). The boxes were sealed and placed in an incubator (22°C constant, high hygrometry ensured by the water-soaked filter papers, natural photoperiod). The severity of the disease was assessed 7 days post-inoculation, by estimating the percentage of disk surface displaying sporulation.

### Results :

The infection rate is satisfactory (78% in an untreated control).

Figure 4 shows the severity (%) of Downy Mildew on foliar disk for a suspension of Kocide Opti using registered dosage concentration (0.19 g/L) and solution 1 according to the invention in different concentrations in copper metal (0.19, 0.38, 0.76 and 1.13 g/L).

The severity data were submitted to a variance analysis associated with comparative mean test (Tukey test: R2 = 0.968; Pr>F : <0.0001, threshold P = 0.05). Data were converted by arcsine transformation prior to analysis. The same letter indicates no significant difference between modalities (treatment/concentration).

These results show that composition 1 according to the invention has a biocidal activity similar to that of Kocide Opti at the registered dosage in copper metal (0.19 g/L).

Moreover, very slight symptoms of phytotoxicity were observed at the higher concentration for composition 1 (solution 1d) under the form of small necrotic spots.

This illustrates that, next to its ease for application due to its solubility, composition 1 according to the invention is a suitable precursor to prepare a biocidal solution with a very good biocidal activity (comparable to copper hydroxide) together with a very low phytotoxicity.

Next to these bioassay results, it is expected that composition 1, based on copper and citric acid, leads to the formation of a slightly soluble compound of formula Cu₃(C₆H₅O₇)₂.xH₂O, showing no toxic effect on fish, birds, mammals and bees.

### Bioassay of efficacy of Composition 2 against P. viticola on grapevine leaf disk

### Methodology :

Composition 2 was tested as preventive protection towards grapevine downy mildew, in comparison with a suspension of the commercial product Kocide Opti^{™} (based on copper hydroxide, insoluble), as a reference. Both were standardized at the equivalent of 300 g of metal copper per ha for the minimal tested dosage. The range of tested concentrations were as followed : 1, 2, 4 and 6 fold in comparison of the registered dosage of Kocide Opti (solutions 2a, b, c, d). Solutions 2 a-d from composition 2 and the suspension of Kocide Opti were applied by means of a Potter spray tower on Petri dishes containing 10 leaf disks (cv Cabernet Sauvignon) on water-soaked filter papers. After application, the leaf discs are gently dried under a laminar flow hood. Inoculation is carried out 24 hours after treatment/application, using a suspension of sporangia (1.10⁵ sporanges.ml⁻¹). The boxes were sealed and placed in an incubator (22°C constant, high hygrometry ensured by the water-soaked filter papers, natural photoperiod). The severity of the disease was assessed 7 days post-inoculation, by estimating the percentage of disk surface displaying sporulation.

### Results:

The infection rate is satisfactory (78% in an untreated control).

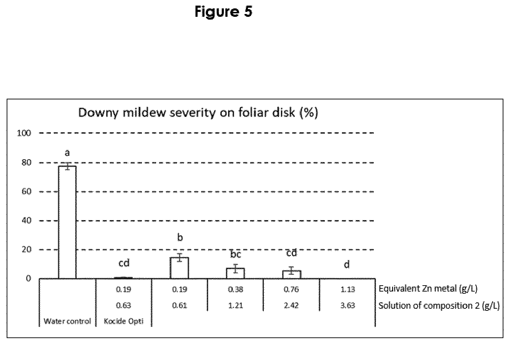

Figure 5 shows the severity (%) of Downy Mildew on foliar disk for a suspension of Kocide Opti using registered dosage concentration (0.19 g/L) and solutions of composition 2 according to the invention in different concentrations in zinc metal (0.19, 0.38, 0.76 and 1.13 g/L).

The severity data were submitted to a variance analysis associated with comparative mean test (Tukey test: R2 = 0.881; Pr>F : <0.0001, threshold P = 0.05). Data were converted by arcsine transformation prior to analysis. A different letter on the graph indicates a significant statistical difference between the treatment/concentration.

These results show that composition 2 according to the invention has a satisfactorily biocidal activity, similar to that of Kocide Opti at the higher concentration. The lowest concentration, although less active than the copper reference, is 81% effective.

Moreover, any symptoms of phytotoxicity were observed at the higher concentration of composition 2 (solution 2d).

This illustrates that, next to its ease for application due to its solubility, composition 2 according to the invention is a suitable precursor to prepare a biocidal solution with a good biocidal activity (even if lower than that of copper hydroxide) together with no phytotoxicity.

Finally, it is also expected that composition 2, based on zinc and citric acid, leads to the formation of a slightly soluble compound of formula Zn₃(C₆H₅O₇)₂.xH₂O, which is not toxic and "generally recognized as safe".

### Bioassay of efficacy of compositions 1 and 2 against Botrytis cinerea (in vitro test)

### Methodology :

Compositions 1 and 2 were tested in vitro as preventive protection towards grey mould (Botrytis cinerea).

The determination of the Minimal Inhibitory Concentration (MIC) is based on an in vitro poisoned food method and carried out in a 24 well plate. Compositions 1 and 2 were first dissolved in a liquid culture media (PDB, potato dextrose broth, Difco) in a range of desired concentrations, which were distributed in a 24-well plate in triplicates. The positive control was constituted of pure media culture, whereas the negative control was carried out by adding the registered dosage of the fungicide Switch (cyprodinil + fludioxonil, Syngenta, Swizerland) to the culture media. The addition of a nutrient agar medium (PDA, potato dextrose agar, Difco) maintained at 45°C at a final concentration of 30% v/v allowed solidification of the nutrient medium. The Inoculum was constituted by a suspension of conidia from 10 days old colonies, in sterile water (10⁵ to 10⁶/ml) - 50 µl is deposited per well. The plates were incubated at 22°C in natural light cycle. The assessment of fungal growth is executed at 7, 14 and 25 days after inoculation to discriminate fungistatisme to fongitoxicity.

### Results:

As expected, mycelium growth was recorded in positive control and inhibits in negative control.

For composition 1, the MIC is established above 5 g/L after 7 days after inoculation (dpi) but went up between 10 and 20 g/L at 25 dpi, indicating that the pathogen can cope with this concentration but is blocked at 20 g/L.

Composition 2 presents a better efficacy to control Botrytis, with a lower MIC, in the range of 5-10 g/L.

### Bioassay of efficacy of compositions 3 and 4 against P. viticola on grapevine leaf disk

### Methodology :

Compositions 3 and 4 were tested as preventive protection towards grapevine downy mildew, in comparison with a suspension of the commercial product Kocide Opti^{™} (based on copper hydroxide, insoluble), as a reference.

The inhibitory concentration of 50% of the pathogen infection (IC₅₀) was calculated according downy mildew severity assessment, using the XLSTAT software (Four Five-parameter logistic regression module). For that, concentrations ranging from 0.025 to 3 g composition/L were tested (solution in water).

Solutions from compositions 3-4 and the suspension of Kocide Opti were applied by means of a Potter spray tower on Petri dishes containing 10 leaf disks (cv Cabernet Sauvignon) on water-soaked filter papers. After application, the leaf discs are gently dried under a laminar flow hood. Inoculation is carried out 24 hours after treatment/application, using a suspension of sporangia (1.10⁵ sporanges.ml⁻¹). The boxes were sealed and placed in an incubator (22°C constant, high hygrometry ensure by the water-soaked filter papers, natural photoperiod). The severity of the disease was assessed 7 days post-inoculation, by estimating the percentage of disk surface displaying sporulation.

### Results:

The infection rate is satisfactory (77% in an untreated control) and the reference presents no sporulation.

Composition 4 shows a better IC₅₀ than composition 3, respectively at concentrations in water at 0.025 and 0.070 g/L. By extrapolation, IC₉₉ (theoretical dosage allows a total control of the disease) can be determined at 0.532 g/L for composition 3 and 0.106 g/L for composition 4.

Moreover, any symptoms of phytotoxicity were observed at the highest tested concentration of compositions 3 and 4.

### Comparative results of bioassays of compositions 1-4

The following table summarizes the resuts obtained for bioassays carried out with compositions 1-4 according to the invention against P. viticola, as well as values for the commercial Kocide Opti^{®} based on its registered dosage.

The table includes, for each composition 1-4 and Kocide Opti product, its mass percentage in metal (Cu and/or Zn) and its determined IC₉₉ value (in g/L). It also gives the amount of metal (g/ha) needed considering the IC₉₉ value and application of 400 L/ha of water solution (standard value).

| | **%Cu** | **%Zn** | **IC₉₉ (g/L)** | **L/ha** | **g compo/ha** | **By application** | | **By season (a year, 10 treatments)** | |
|---|---|---|---|---|---|---|---|---|---|
| | | | | | | **Cu (g/ha)** | **Zn (g/ha)** | **Cu (g/ha)** | **Zn (g/ha)** |
| **Compo 1** | 28.16 | / | 0.788 | 400 | 315.12 | 88.8 | / | 888 | / |
| **Compo 2** | / | 31.20 | 3.0 | 400 | 1200 | / | 374.4 | / | 3744 |
| **Compo 3** | 19.23 | 9.90 | 0.532 | 400 | 212.8 | 40.9 | 21.1 | 409 | 211 |
| **Compo 4** | 9.86 | 20.29 | 0.106 | 400 | 42.4 | 4.18 | 8.60 | 41.8 | 86 |
| **Kocide Opti** | 30 | / | | 400 | 1000 ^{∗} | 300 | / | 3000 | / |

| | | | | | | | | | |
|---|---|---|---|---|---|---|---|---|---|
| **registered dosage* | | | | | | | | | |

These results shows that :
- composition 1 is significantly more effective than Kocide Opti (more than 3 times less copper amounts by season);
- even if composition 2 (only Zn) is less effective than composition 1 (only Cu), it is nevertheless close to Kocide Opti (with the other advantages brought compared with Kocide Opti);
- the combination of Cu and Zn in the solid composition allows to decrease the metal amount needed/applied compared to a solid composition with only Cu (or only Zn);
- the combination of Cu and Zn in the solid composition allows to significantly decrease the metal amount needed/applied compared to Kocide Opti (up to more than 20 times, for composition 4).

### Bactericidal activity results (lab tests)

### Methodology :

Compositions 1-4 were tested, in water solution, against some bacteria: *Escherichia coli,* Staphylococcus *aureus, Pseudomonas Aerginosa* et Enterococcus hirae.

Their Minimum Inhibitory Concentration (MIC), namely the lowest product tested concentration sufficient for complete inhibition of microbial growth, were determined.

### Trials were performed according to ISO 20776-1:2007 standard:

| | |
|---|---|
| - Culture media : | Mueller-Hinton Broth (MHB) |
| - Inoculum: mL of suspension) | 5 to 8.10⁵ CFU/mL (colony-forming unit by |
| - Temperature: | 37°C |

| | |
|---|---|
| - Incubation time: | 18 ± 2 hours |
| - Antibiotic validation: | Tetracycline |

### Results:

The following table gives the results obtained.

| | *Escherichia coli* ATCC^{®} 10536^{™} | Staphyloccocus *aureus* ATCC^{®} 6538^{™} | *Pseudomonas aeruginosa* ATCC^{®} 15442^{™} | *Enterococcus hirae* ATCC^{®} 10541^{™} |
|---|---|---|---|---|
| **Compo 1** | 1.28 g/L | 2.56 g/L | 2.56 g/L | 2.56 g/L |
| **Compo 2** | 12.8 g/l | 2.56 g/l | 12.8 g/l | 12.8 g/l |
| **Compo 3** | 2.56 g/L | 2.56 g/L | 2.56 g/L | 2.56 g/L |
| **Compo 4** | 2.56 g/L | 2.56 g/L | 6.40 g/L | 2.56 g/L |

MIC values obtained show moderate to good efficacy against tested human pathogenic bacteria.

## Claims

1. Composition in a solid form, comprising an intimate mixture of a solid compound (A) and a solid compound (B),
- compound (A) being at least an inorganic metal source, metal being copper(II) orzinc(II);
- compound (B) being a carboxylic acid bearing at least two carboxylic groups; **characterized in that** the molar ratio metal/acid is from 0.8 to 2.2.

2. Composition according to claim 1, **characterized in that** the molar ratio metal/acid is from 1 to 2.

3. Composition according to claim 2, **characterized in that** the molar ratio metal/acid is about 1.5 or about 1.67 or about 2.

4. Composition according to the preceding claim, **characterized in that** compound (B) is a carboxylic acid bearing at least three carboxylic groups.

5. Composition according to the preceding claim, **characterized in that** compound (B) is trans-aconitic acid, tricarballylic acid or citric acid.

6. Composition according to the preceding claim, **characterized in that** compound (B) is citric acid.

7. Composition according to one of the preceding claims, **characterized in that**:
- when metal is copper(II), the at least an inorganic metal source is copper(II) hydroxide;
- when metal is zinc(II), the at least an inorganic metal source is zinc(II) oxide.

8. Composition according to the preceding claim, **characterized in that** compound (A) comprises at least an inorganic zinc(II) source and at least an inorganic copper(II) source.

9. Composition according to the preceding claim, **characterized in that** it has a water solubility of at least 60 g/L at 20°C.

10. Composition according to one of the preceding claims, **characterized in that** it is in the form of a powder, granules or tablets.

11. Composition according to one of the preceding claims, **characterized in that** it comprises at least one additive selected from a list comprising pH regulating agents, film-forming agents, anti-caking agents, surfactants, wetting agents, anti-foaming agents, anti-drifts, sticking agents, thickeners, foaming agents, solidifying agents, other biocides, fertilizers and stabilizers.

12. Process of preparing a composition according to claims 1-11, **characterized in that** it comprises a step of mixing solid compound (A) and solid compound (B) by applying a mechanical action to obtain an intimate mixture.

13. Process according to claim 12, **characterized in that** said mixing is carried out by ball milling or twin-screw extrusion.

14. Process of preparing a biocidal solution, comprising a step of combining the composition in a solid form according to claims 1-11 and a solvent, said solvent comprising water.

15. Process according to claim 14, **characterized in that** said solvent is essentially water.

16. Process according to claims 14-15, **characterized in that** the amounts of said composition and said solvent are such that said solution has a concentration in metal M between 0.01 g/L and 5 g/L and preferably, between 0.1 g/L and 2 g/L.

17. Process of preventing or inhibiting the growth of living pathogenic organisms on plants, plant products, seeds, tubers, fruits and soils, **characterized in that** it comprises, in order, the steps of:
a) preparing a biocidal solution according to claim 14-16; and
b) applying said solution on plants, plant products, seeds, tubers, fruits or soils.

18. Process according to claim 17, **characterized in that** said step of applying is carried out by spraying or pulverizing or dipping or drench or coating.

19. Process according to claims 17-18, **characterized in that** it comprises, after the step b) of applying, a step c) of crystallization and/or precipitation, on plants, plant products, seeds, tubers, fruits or soils, of a solid compound (C) slightly soluble to insoluble in water.

20. Process according to claim 19, **characterized in that**, when compound (B) is citric acid, said solid compound (C) comprises at least a citrate with the formula Cu_{w}Znₓ(C₆H_{y}O₇)_{z}, where
- 0 ≤ w ≤3;
- 0 ≤ x ≤ 3;
- 1 ≤ (w + x) ≤ 3;
- 4 ≤ y ≤ 8;
- 1 ≤ z ≤2;
- 1 ≤ (w + x) / z ≤ 2 (for sake of clarity, (w + x) / z corresponds to the molar ratio metal/acid according to the invention);
and/or its hydrates.

21. Use of a composition according to claims 1-11, as a biocide in:
i) agriculture, including field crops, horticulture, arboriculture, viticulture, as preharvest and/or postharvest treatment;
ii) lawn and garden including professional turf;
iii) forestry;
iv) the field of disinfection in general.

22. Use according to preceding claim, as a fungicide and/or as a bactericide, preferably as a fungicide.
